# EUROPEAN PATENT APPLICATION

(11) **EP 4 484 593 A1**
(43) Date of publication of application: **01.01.2025**
(21) Application number: 22928879.0
(22) Date of filing: 09.11.2022
(51) Int. Cl.: C22B 7/00, C22B 15/00, C22B 23/02, B09B 3/40, H01M 10/54

(54) **PRODUCTION METHOD FOR VALUABLE METALS**

(30) Priority: 22.02.2022 JP 2022025641
(71) Applicant: SUMITOMO METAL MINING CO., LTD., Tokyo 105-8716 (JP)
(72) Inventor: YAMASHITA Yu, Niihama-shi, Ehime 792-0002 (JP); MAEBA Kazunari, Niihama-shi, Ehime 792-0002 (JP); NAGAKURA Toshihiko, Niihama-shi, Ehime 792-0002 (JP)
(74) Representative: Jones, Nicholas Andrew
(86) International application number: PCT/JP2022/041659
(87) International publication number: WO 2023/162361

(57) **Abstract**

Provided is a method capable of safely and efficiently recovering valuable metals from raw materials including a waste lithium ion battery and the like.

The present invention provides a method for producing valuable metals from a raw material containing the valuable metals containing Cu, Ni, and Co, the method including: a preparation step of preparing a raw material containing at least Li, Al, and the valuable metals; a reductive melting step of subjecting the raw material to a reductive melting treatment using a melting furnace provided with a cooling means for cooling a furnace wall from an outside to obtain a reduced product containing an alloy containing the valuable metals and slag; and a slag separation step of separating slag from the reduced product to recover an alloy, wherein in any one or both of the preparation step and the reductive melting step, a flux containing calcium (Ca) is added to the raw material, and in the reductive melting step, while cooling the furnace wall of the melting furnace by the cooling means, the thickness of the slag layer is adjusted so that the temperature of the interface between a layer of the alloy and a layer of the slag is higher than the temperature of the refractory surface of the furnace wall in the melting furnace.

## Description

### Technical Field

The present invention relates to a method for producing valuable metals from a raw material such as a waste lithium ion battery.

### Background Art

In recent years, lithium ion batteries have been widely used as lightweight and high-output secondary batteries. A well-known lithium ion battery has a structure in which a negative electrode material, a positive electrode material, a separator, and an electrolytic solution are sealed in an exterior can.

For example, the exterior can is made of a metal such as aluminum (Al) or iron (Fe). The negative electrode material is made of a negative electrode active material (graphite and the like) fixed to a negative electrode current collector (copper foil and the like). The positive electrode material is made of a positive electrode active material (lithium nickelate, lithium cobaltate, and the like) fixed to a positive electrode current collector (aluminum foil and the like). The separator is made of a polypropylene porous resin film and the like. The electrolytic solution contains an electrolyte such as lithium hexafluorophosphate (LiPF₆).

One of the main applications of the lithium ion battery is a hybrid vehicle and an electric vehicle. Therefore, it is expected that a large amount of mounted lithium ion batteries is discarded in the future in accordance with the life cycle of an automobile. In addition, there are lithium ion batteries that are discarded as defective products during the production. Such used batteries and defective batteries generated during the production (hereinafter, also referred to as "waste lithium ion battery") are required to be reused as resources.

As a reuse method, a pyrometallurgical process involving entirely melting the waste lithium ion batteries in a high-temperature furnace has been proposed. The pyrometallurgical process includes melting crushed waste lithium ion batteries, and separating and recovering valuable metals typified by cobalt (Co), nickel (Ni), and copper (Cu), which are recovery targets, from low value-added metals typified by iron (Fe) and aluminum (Al) by utilizing a difference in oxygen affinity therebetween. In this method, the low value-added metals are oxidized as much as possible to form a slag, and the valuable metals are recovered as an alloy by suppressing its oxidation as much as possible.

Patent Literature 1 discloses a method for recovering valuable metals containing nickel and cobalt from a waste battery of a lithium ion battery containing nickel and cobalt. Specifically, there has been proposed a process including: a melting step of melting a waste battery to obtain a molten material; an oxidation step of performing an oxidation treatment on the molten material or on the waste battery before the melting step to oxidize the waste battery; and a slag separation step of separating slag from the molten material to recover an alloy containing valuable metals, wherein in the melting step, valuable metals are recovered by adding calcium oxide to lower the liquidus temperature of the slag.

### Citation List

### Patent Literature

Patent Literature 1: JP 6819827 B2

### Summary of Invention

### Technical Problem

However, the technique disclosed in Patent Literature 1 still has a problem. For example, in the method disclosed in Patent Literature 1, when the slag liquidus temperature is excessively lowered by the addition of the flux, there is a problem that a coating is not formed on the surface of the refractory of the furnace wall of the processing furnace and the refractory is eroded. When such erosion occurs, there is a risk that the processed material leaks to the outside of the furnace, which is a safety problem, and the cost required for maintenance of the refractory of the furnace wall becomes enormous, and valuable metals cannot be recovered at low cost.

When the slag heating temperature is excessively lowered as the slag liquidus temperature is lowered by the addition of the flux, the temperature of the interface between the slag layer and the metal (alloy) layer is lower than the slag liquidus temperature. Then, it was found that when the temperature of the interface is lower than the temperature of the surface of the refractory which is lower than the slag liquidus temperature, the solidified layer rapidly grows from the refractory on the side wall at the interface, the discharge of the metal is impossible, and the operation cannot be continued.

The present invention has been proposed in view of such circumstances, and an object thereof is to provide a method capable of safely and efficiently recovering valuable metals from raw materials including a waste lithium ion battery and the like while performing stable operation.

### Solution to Problem

The present inventors have conducted intensive studies. As a result, the present inventors have found that the above-described problem can be solved by using a melting furnace provided with a means for cooling the furnace wall from the outside and adjusting the thickness of the slag layer so that the temperature of the interface between a layer of the alloy and a layer of the slag is larger than the temperature of the refractory surface of the furnace wall in the melting furnace while using the means for cooling the furnace wall from the outside in the step of subjecting the raw material to the reductive melting treatment, thereby completing the present invention.

(1) A first aspect of the present invention is a method for producing valuable metals from a raw material containing the valuable metals containing copper (Cu), nickel (Ni), and cobalt (Co), the method comprising: a preparation step of preparing a raw material containing at least lithium (Li), aluminum (Al), and the valuable metals; a reductive melting step of subjecting the raw material to a reductive melting treatment using a melting furnace provided with a cooling means for cooling a furnace wall from an outside to obtain a reduced product containing an alloy containing the valuable metals and slag; and a slag separation step of separating slag from the reduced product to recover an alloy, wherein in any one or both of the preparation step and the reductive melting step, a flux containing calcium (Ca) is added to the raw material, and in the reductive melting step, while cooling the furnace wall of the melting furnace by the cooling means, thickness of the slag layer is adjusted so that the temperature of the interface between a layer of the alloy and a layer of the slag is higher than the temperature of the refractory surface of the furnace wall in the melting furnace.
(2) A second invention of the present invention is the method for producing valuable metals according to the first invention, wherein in the reductive melting step, the thickness of the slag layer is adjusted while confirming that the interface is a molten body by inserting a measuring rod into the interface between a layer of the alloy and a layer of the slag.
(3) A third invention of the present invention is the method for producing valuable metals according to the first or second invention, in which the raw material includes a waste lithium ion battery.

### Advantageous Effects of Invention

According to the present invention, valuable metals can be safely and efficiently recovered from raw materials including waste lithium ion battery and the like while performing stable operation.

### Brief Description of Drawings

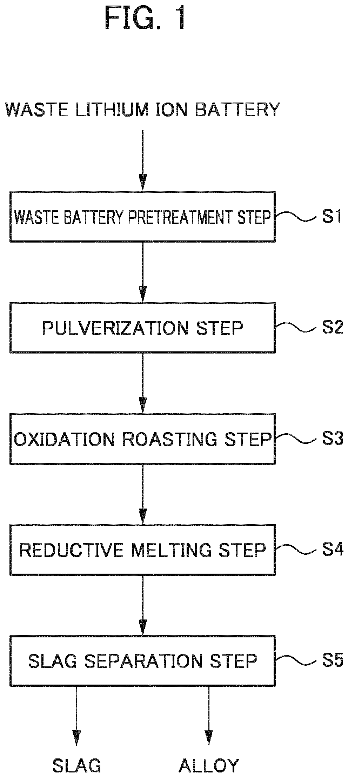

Fig. 1 is a process chart showing an example of a flow of a method for recovering valuable metals from a waste lithium ion battery.

### Description of Embodiments

Hereinafter, specific embodiments (Hereinafter, referred to as "present embodiment".) of the present invention is described. Note that the present invention is not limited to the following embodiments, and various modifications can be made without changing the gist of the present invention.

### <<1. Method for recovering valuable metals>>

The method for producing valuable metals according to the present embodiment is a method for separating and recovering valuable metals from a raw material containing at least lithium (Li), aluminum (Al), and valuable metals. Therefore, it can also be referred to as a recovery method of valuable metals. The method according to the present embodiment is mainly a method according to a pyrometallurgical process, but may be composed of a pyrometallurgical process and a hydrometallurgical process.

Specifically, the method according to the present embodiment includes the following steps: a preparation step of preparing a raw material containing lithium (Li), aluminum (Al), and valuable metals (preparation step); a step of subjecting the prepared raw material to a reductive melting treatment using a melting furnace provided with a cooling means for cooling a furnace wall from outside to obtain a reduced product (molten product) containing an alloy containing valuable metals and slag (reductive melting step); and a step of separating the slag from the obtained reduced product to recover the alloy (slag separation step).

Here, the valuable metals constituting the alloy to be recovered include copper (Cu), nickel (Ni), cobalt (Co), and combinations thereof, and includes at least one metal or alloy selected from the group consisting of copper, nickel, cobalt, and combinations thereof.

In this method, a flux containing calcium (Ca) is added to the raw material in any one or both of the preparation step and the reductive melting step.

Therefore, the slag produced by the treatment in the reductive melting step contains a ternary slag (Al₂O₃-Li₂O-CaO ternary slag) composed of aluminum oxide (Al₂O₂), lithium oxide (Li₂O), and calcium oxide (CaO). The alloy to be produced contains a ternary alloy (Cu-Ni-Co ternary alloy) composed of copper (Cu), nickel (Ni), and cobalt (Co).

In the method according to the present embodiment, in the reductive melting step, while the furnace wall of the melting furnace is cooled by the cooling means for cooling the furnace wall from the outside, the reductive melting treatment is performed by adjusting the thickness of the slag layer so that the temperature of the interface between the layer of the alloy and the layer of the slag is larger than the temperature of the refractory surface of the furnace wall in the melting furnace.

### [Preparation step]

In the preparation step, a raw material as a treatment target to be treated is prepared. The raw material is a treatment target for recovering a valuable metal, and as described above, includes valuable metals composed of the group consisting of copper (Cu), nickel (Ni), and cobalt (Co) as well as lithium (Li) and aluminum (Al). The raw material may contain these components (Li, Al, Cu, Ni, Co) in the form of a metal or in the form of a compound such as an oxide. In addition, the raw material may contain an inorganic component or an organic component other than these components.

The target of the raw material is not particularly limited, and examples thereof include a waste lithium ion battery, a dielectric material (capacitor), and a magnetic material. In addition, the form is not limited as long as it is suitable for the treatment in the reductive melting step described later. In the preparation step, the raw material may be subjected to a treatment such as a pulverization treatment to form a suitable form. Furthermore, in the preparation step, the raw material may be subjected to a treatment such as a heat treatment or a fractionation treatment to remove unnecessary components such as moisture and organic substances.

In the preparation step, a flux containing calcium (Ca) can be added to the raw material. The flux to be added is described later in detail. In the method according to the present embodiment, a flux is added in any one or both of the preparation step and the reductive melting step.

### [Reductive melting step]

In the reductive melting step, the prepared raw material is charged into a melting furnace, and reductive melting treatment is performed using a means (cooling means) for cooling the furnace wall from the outside. Then, the raw material is reductively melted while the thickness of the slag layer is adjusted so that the temperature of the interface between the layer of the alloy to be produced and the layer of the slag is higher than the temperature of the refractory surface of the furnace wall in the melting furnace, thereby obtaining a reduced product. The produced reduced product contains the alloy and the slag separately.

The reductive melting treatment is a treatment involving reductively melting a raw material by heating in a melting furnace to obtain a reduced product. The purpose of this treatment is to convert low value-added metals (Al and the like) contained in the raw material into an oxide, and at the same time, to recover valuable metals (Cu, Ni, Co) as an alloy integrated through reduction and melting. After the reductive melting treatment, an alloy in a molten state is obtained. In the case of performing an oxidative roasting treatment described later prior to the reductive melting treatment, the obtained oxidatively roasted product is charged into a melting furnace and reductively melted by heating. As a result, low value-added metals (Al and the like) oxidized by the oxidative roasting treatment are maintained as an oxide, and at the same time, valuable metals (Cu, Ni, Co) are reduced and melted to be recovered as an integrated alloy.

In the reductive melting treatment, it is preferable to introduce a reducing agent. As the reducing agent, carbon and/or carbon monoxide is preferably used. Carbon has an ability to easily reduce valuable metals (Cu, Ni, Co) as a recovery target. For example, 2 moles of valuable metal oxide (copper oxide, nickel oxide, and the like) can be reduced with 1 mole of carbon. In addition, the reduction technique using carbon or carbon monoxide has extremely higher safety than the technique using a metal reducing agent (for example, a thermite reaction process using aluminum).

As the carbon, artificial graphite and/or natural graphite can be used. In addition, if there is no risk of impurity contamination, coal or coke can be used.

The alloy produced by reductively melting contains valuable metals as described above. Therefore, a component (alloy) containing valuable metals and other components can be separated in the reduced product. This is because low value-added metals (Al or the like) have a high oxygen affinity, whereas valuable metals have a low oxygen affinity. For example, aluminum (Al), lithium (Li), carbon (C), manganese (Mn), phosphorus (P), iron (Fe), cobalt (Co), nickel (Ni), and copper (Cu) are generally oxidized in the order of Al > Li > C > Mn > P > Fe > Co > Ni > Cu. That is, Al is most easily oxidized, and Cu is most hardly oxidized. Therefore, low value-added metals (Al and the like) are easily oxidized to become a slag, and valuable metals (Cu, Ni, Co) are reduced to become a metal (alloy). In this way, low value-added metals and valuable metals can be efficiently separated into a slag and an alloy.

In the reductive melting treatment, a flux containing calcium (Ca) can be added to the raw material. In the method according to the present embodiment, a flux is added in any one or both of the preparation step and the reductive melting step. The flux contains calcium (Ca) as a main component, and examples thereof include calcium oxide (CaO) and calcium carbonate (CaCO₃). However, when the raw material as a treatment target contains the calcium component in a required amount, the flux may not be added.

In addition, the melting furnace used for the reductive melting treatment includes a means (mechanism) for cooling the furnace wall from the outside by water cooling or the like. By using such a melting furnace and cooling the furnace wall from the outside by the cooling means, the composite oxide having a high melting point can be preferentially deposited from the slag in contact with the refractory surface inside the melting furnace, and the solidified layer (solidified slag layer, slag coating layer) of the slag can be effectively formed on the refractory surface. Examples of the cooling means for cooling the furnace wall from the outside include an aspect in which a cooling pipe is provided on the refractory constituting the furnace wall or a water-cooling-type jacket is provided.

In the method according to the present embodiment, while the furnace wall of the melting furnace is cooled by the cooling means, the thickness of the slag layer is adjusted so that the temperature of the interface between the layer of the alloy and the layer of the slag is larger than the temperature of the refractory surface of the furnace wall in the melting furnace, and the reductive melting treatment is performed.

According to such a method, in the reductive melting treatment, erosion of the refractory constituting the furnace wall of the melting furnace can be suppressed and the treatment can be performed with high safety while performing a stable operation, and valuable metals can be recovered at a high recovery ratio.

Specifically, in the method according to the present embodiment, cooling is performed from the outside of the furnace wall by the cooling means to form the slag coating layer on the refractory surface of the furnace wall, thereby suppressing erosion of the refractory. In addition, when the slag coating layer is formed, the thickness of the layer of the slag is adjusted such that the temperature of the interface (hereinafter, also simply referred to as "interface") between the layer of the alloy to be produced and the layer of the slag is higher than the temperature of the refractory surface of the furnace wall.

Here, when the melting furnace is, for example, an electric furnace, the distance between the tip and the interface of the graphite electrode (hereinafter, also simply referred to as an "electrode") immersed in the slag layer and the depth of the electrode immersed in the slag layer are controlled so that the current to be applied is constant. At this time, in the constant current control, the current value increases as the slag layer is thicker, and thus, the current value is lowered to make the current value constant by pulling up the electrode and increasing the distance between the tip of the electrode and the interface. However, since the vicinity of the tip of the electrode having the highest temperature is separated from the interface, the temperature of the interface is lowered. Then, when the temperature of the interface becomes equal to or lower than the temperature of the refractory surface of the furnace wall which is adjusted to be equal to or lower than the slag liquidus temperature in order to form a coating for protecting the refractory, the slag solidified layer rapidly grows from the area in contact with the refractory at the interface.

When the slag solidified layer is formed at the interface, for example, the metal particles in the slag cannot reach the metal layer below the interface when the raw material is charged additionally, so that the separability between the slag and the metal is extremely deteriorated, and the metal (alloy) cannot be effectively recovered. Furthermore, the discharge of the alloy becomes impossible, and the operation is greatly hindered.

Therefore, in the method according to the present embodiment, in order to avoid such a state, the slag thickness is adjusted to maintain the distance from the electrode tip to the interface so that the temperature of the interface between the layer of the alloy to be produced and the layer of the slag is higher than the temperature of the refractory surface of the furnace wall.

The fact that the temperature of the interface between the layer of the alloy and the layer of the slag is higher than the temperature of the refractory surface of the furnace wall can be determined by inserting a measuring rod from the upper part of the melting furnace toward the interface and confirming that the interface is a molten body. In addition, it can be determined by estimating the temperature of the refractory surface of the furnace wall by a thermocouple embedded in the furnace wall refractory. That is, when the interface is a molten body, it means that the temperature of the interface is maintained at a necessary temperature equal to or higher than the slag liquidus temperature (slag liquidus temperature < temperature of interface), and the distance from the electrode tip to the interface is also a distance that can impart necessary heat to the interface, and the thickness of the slag is adjusted so that the electrode can be immersed in the slag up to the position of the electrode tip. In addition, it means that an appropriate coating is formed on the refractory surface of the furnace wall, the temperature of the refractory surface is maintained at a necessary temperature equal to or lower than the slag liquidus temperature (the refractory temperature of the furnace wall < the slag liquidus temperature), and the refractory is appropriately cooled by the cooling means provided in the melting furnace.

In practice, the distance from the electrode tip to the interface is adjusted in accordance with the variation of the slag thickness, and the presence or absence of the slag solidified layer growing on the interface is examined by inserting a measuring rod when the distance from the electrode tip to the interface is varied. Further, by estimating the refractory surface temperature at that time from the thermocouple embedded in the furnace wall refractory, it can be controlled to satisfy "the refractory temperature of the furnace wall < the slag liquidus temperature < the temperature of the interface" and adapted to the operation.

In the reductive melting treatment, the heating temperature (slag heating temperature) is preferably 1400°C or higher and 1600°C or lower. The slag heating temperature is more preferably 1500°C or more and 1600°C or less. When the slag heating temperature exceeds 1600°C, thermal energy is wastefully consumed, and consumption of refractory materials such as crucibles constituting the melting furnace becomes severe, and productivity may be lowered. On the other hand, when the slag heating temperature is lower than 1400°C, there is a possibility that the separability between the slag to be produced and the alloy deteriorates and the recovery ratio of valuable metals decrease.

In addition, by performing the operation in the range of the slag heating temperature as described above, the metal heating temperature of the metal layer located below the slag layer becomes 1300°C or higher, and the temperature at which the metal can be sufficiently melted can be maintained. The melting point of the resulting alloy composed of copper, nickel, and cobalt is about 1300°C to 1400°C.

When the oxidative roasting treatment (oxidative roasting step) is performed prior to the reductive melting treatment, it is not necessary to perform the oxidation treatment in the reductive melting treatment. However, when the oxidation in the oxidative roasting treatment is insufficient or when it is intended to further adjust the degree of oxidation, an additional oxidation treatment may be performed in the reductive melting treatment or after the reductive melting treatment. By performing the additional oxidation treatment, the degree of oxidation can be more strictly adjusted.

Examples of the method of additionally performing the oxidation treatment include a method of blowing an oxidizing agent into the molten material produced by the reductive melting treatment. Specifically, the oxidation treatment is performed by inserting a metal tube (lance) into the molten material produced by the reductive melting treatment, and blowing an oxidizing agent by bubbling. In this case, a gas containing oxygen such as air, pure oxygen, or an oxygen-enriched gas can be used as the oxidizing agent.

In addition, in the reductive melting treatment, harmful substances such as dust and exhaust gas may be generated, but the harmful substances can be detoxified by performing a treatment such as a known exhaust gas treatment.

### [Oxidative roasting step]

In the method according to the present embodiment, a step (oxidative roasting step) of oxidatively roasting the raw material to obtain an oxidatively roasted product can be further provided prior to the reductive melting treatment as necessary.

The oxidation roasting treatment (oxidation treatment) is a treatment in which a raw material is subjected to oxidation roasting to form an oxidatively roasted product, and even when carbon is contained in the raw material, the carbon is oxidized and removed, and the alloy integration of valuable metals in the reductive melting treatment can be promoted. Specifically, in the reductive melting treatment, valuable metals are reduced to locally become molten fine particles, but at this time, carbon contained in the charge physically hinders aggregation of the molten fine particles (valuable metals), and hinders aggregation and integration of the molten fine particles as well as separation between the metal (alloy) and slag due to the aggregation, and may decrease the recovery ratio of the valuable metals. In consideration of this point, by subjecting the raw material to the oxidative roasting treatment prior to the reductive melting treatment, carbon in the raw material can be effectively removed, whereby aggregation and integration of the molten fine particles (valuable metals) produced by the reductive melting treatment proceeds, and the recovery ratio of the valuable metals can be further increased.

In the oxidation roasting treatment, the degree of oxidation can be adjusted as follows. That is, as described above, aluminum (Al), lithium (Li), carbon (C), manganese (Mn), phosphorus (P), iron (Fe), cobalt (Co), nickel (Ni), and copper (Cu) are generally oxidized in the order of Al > Li > C > Mn > P > Fe > Co > Ni > Cu. In the oxidative roasting treatment, the treatment is allowed to proceed until the entire amount of aluminum (Al) is oxidized. The treatment may be promoted until a part of iron (Fe) is oxidized, but it is preferable to keep the degree of oxidation to such an extent that cobalt (Co) is not recovered in the form of a slag through oxidation.

In order to adjust the degree of oxidation in the oxidation roasting treatment, it is preferable to introduce an appropriate amount of oxidizing agent. In particular, when a raw material containing a waste lithium ion battery is used, it is preferable to introduce an oxidizing agent for treatment. The lithium ion battery contains a metal such as aluminum or iron as an exterior material. The lithium ion battery also contains an aluminum foil and a carbon material as a positive electrode material and a negative electrode material. Furthermore, in the case of a battery assembly, plastic is used as an external package. Since these are all materials that act as a reducing agent, the degree of oxidation can be adjusted to fall within an appropriate range by introducing an oxidizing agent.

The oxidizing agent is not particularly limited as long as it can oxidize carbon or low value-added metals (Al and the like), but a gas containing oxygen, such as air, pure oxygen, or an oxygen-enriched gas, which is easy to handle, is preferable. The introduction amount of the oxidizing agent is approximately 1.2 times (for example, approximately 1.15 times to 1.25 times) the amount (chemical equivalent) required for oxidation of each substance to be subjected to the oxidation roasting treatment.

The heating temperature of the oxidation roasting treatment is preferably 700°C or higher and 1100°C or lower, and more preferably 800°C or higher and 1000°C or lower. By setting the heating temperature to 700°C or higher, the oxidation efficiency of carbon can be further enhanced, and the oxidation time can be shortened. In addition, by setting the heating temperature to 1100°C or lower, the thermal energy cost can be suppressed, so that the efficiency of oxidative roasting can be enhanced.

The oxidative roasting treatment can be performed using a known roasting furnace. In addition, it is preferable to use a furnace (preliminary furnace) different from the melting furnace used in the reductive melting treatment, and perform the treatment in the preliminary furnace. As the roasting furnace, any type of furnace can be used as long as it is possible to supply an oxidizing agent (oxygen or the like) while roasting the pulverized product and perform the treatment inside the furnace. Examples of the roasting furnace include conventionally known rotary kilns and tunnel kilns (hearth furnace).

### [Slag separation step]

In the slag separation step, the slag is separated from the reduced product obtained by the reductive melting treatment, and an alloy containing valuable metals is recovered. The slag and the alloy have different specific gravities, and the slag having a specific gravity smaller than that of the alloy gathers at the upper part of the alloy, and thus can be efficiently separated and recovered by specific gravity separation.

A sulfurization step of sulfurizing the obtained alloy and a pulverization step of pulverizing the mixture of the sulfide and the alloy obtained in the sulfurization step may be provided after separating the slag from the reduced product and recovering the alloy in the slag separation step. Furthermore, the valuable metal alloy obtained through such a pyrometallurgical process may be subjected to a hydrometallurgical process. Impurity components can be removed through the hydrometallurgical process, and valuable metals (Cu, Ni, Co) can be separated and purified and recovered. Examples of the treatment in the hydrometallurgical process include known methods such as a neutralization treatment and a solvent extraction treatment.

As described above, in the method according to the present embodiment, in the reductive melting treatment, the reductive melting treatment is performed by adjusting the thickness of the slag layer so that the temperature of the interface between the layer of the alloy and the layer of the slag is higher than the temperature of the refractory surface of the furnace wall in the melting furnace while using the means for cooling the furnace wall from the outside.

According to such a method, a solidified layer (slag coating layer) of slag can be effectively formed on the surface of the refractory, erosion of the refractory constituting the furnace wall of the melting furnace can be suppressed, and the refractory can be treated with high safety. In addition, valuable metals can be stably recovered at a high recovery ratio under stable operation under highly safe treatment.

Here, the raw material as a treatment target preferably includes a waste lithium ion battery. The waste lithium ion battery contains the above-described copper (Cu), nickel (Ni), and cobalt (Co) as valuable metals. In addition, since at least lithium (Li) and aluminum (Al) are contained, the method according to the present embodiment can be preferably applied. Hereinafter, an example of producing valuable metals using a raw material including a waste lithium ion battery is described.

### <<2. Method for producing valuable metals from waste lithium ion battery>>

In the method according to the present embodiment, the raw material as a treatment target is not particularly limited as long as it contains at least lithium (Li), aluminum (Al), and valuable metals, but as described above, it is preferable to use a raw material containing a waste lithium ion battery.

The waste lithium ion battery contains lithium (Li) and valuable metals (Cu, Ni, Co), and also contains a low value-added metals (Al, Fe) and a carbon component. Therefore, valuable metals can be efficiently separated and recovered by using the waste lithium ion battery as a raw material. The waste lithium ion battery is a concept including not only used lithium ion batteries but also defective products generated in the production step of the positive electrode material or the like constituting the battery, residues in the production step, and waste materials in the production step of the lithium ion battery, such as generated scraps. Therefore, the waste lithium ion battery can also be referred to as a lithium ion battery waste material.

Fig. 2 is a process chart showing an example of a flow of a method for producing valuable metals from a waste lithium ion battery. As shown in Fig. 2, this method includes a waste battery pretreatment step (S1) of excluding an electrolytic solution and an exterior can of a waste lithium ion battery, a pulverization step (S2) of pulverizing contents of the waste battery into a pulverized product, an oxidation roasting step (S3) of oxidatively roasting the pulverized product, a reductive melting step (S4) of reductively melting the oxidatively roasted product to form an alloy, and a slag separation step (S5) of separating slag from the reduced product obtained by the reductive melting treatment to recover an alloy.

Although not shown, a sulfurization step of sulfurizing the obtained alloy and a pulverization step of pulverizing a mixture of sulfide and alloy obtained in the sulfurization step may be provided after the slag separation step (S5). Details of each step is described below.

### (Waste battery pretreatment step)

The waste battery pretreatment step S1 is performed for the purpose of preventing explosion and detoxifying the raw material waste lithium ion battery, and removing the exterior can. Since the lithium ion battery is a sealed system, an electrolytic solution or the like is contained therein. When the pulverization treatment is performed as it is, there is a risk of explosion, and thus it is preferable to perform the discharge treatment or the electrolytic solution removal treatment by some method. In addition, the exterior can is often made of metal such as aluminum (Al) or iron (Fe), and it is relatively easy to recover such a metal exterior can as it is. As described above, by removing the electrolytic solution and the exterior can in the waste battery pretreatment step (S1), the safety can be enhanced, and the recovery ratio of valuable metals (Cu, Ni, Co) can be enhanced.

A specific method of the treatment in the waste battery pretreatment step (S1) is not particularly limited, and examples thereof include a method of physically opening a waste battery with a needle-shaped blade edge to remove an electrolytic solution. In addition, a method of combusting the waste battery to detoxify the waste battery is exemplified.

### (Pulverization step)

In the pulverization step S2, the contents of the waste lithium ion battery are pulverized to obtain a pulverized product. The pulverization treatment in the pulverization step S2 is intended to enhance the reaction efficiency in the pyrometallurgical process. By increasing the reaction efficiency, the recovery ratio of the valuable metals (Cu, Ni, Co) can be increased.

A specific pulverization method is not particularly limited. Pulverization can be performed using a conventionally known pulverizer such as a cutter mixer.

When aluminum (Al) or iron (Fe) contained in the exterior can is recovered, the pulverized product may be sieved using a sieve shaker. Since aluminum (Al) easily becomes powdery by slight pulverization, and thus can be efficiently recovered. In addition, iron (Fe) contained in the exterior can may be recovered by magnetic sorting.

The waste battery pretreatment step S1 and the pulverization step S2 together correspond to the "preparation step" described above.

### (Oxidative roasting step)

In the oxidative roasting step S3, the pulverized product obtained in the pulverization step S2 is oxidatively roasted to obtain an oxidatively roasted product. This step is a step corresponding to the "oxidative roasting step" described above, and the details thereof are as described above.

### (Reductive melting step)

In the reductive melting step S4, the oxidatively roasted product obtained in the oxidative roasting step S3 is subjected to a reductive melting treatment to obtain a reduced product. This step is a step corresponding to the "reductive melting step" described above, and the details thereof are as described above.

In particular, in the method according to the present embodiment, the reductive melting treatment is performed by adjusting the thickness of the slag layer so that the temperature of the interface between the layer of the alloy and the layer of the slag is higher than the temperature of the refractory surface of the furnace wall in the melting furnace while using the means for cooling the furnace wall of the melting furnace from the outside. As a result, erosion of the refractory constituting the side wall of the melting furnace can be suppressed and highly safe treatment can be performed while the operation is stably performed, and valuable metals can be recovered at a high recovery ratio.

### (Slag separation step)

In the slag separation step S5, the slag is separated from the reduced product obtained in the reductive melting step S4 to recover the alloy. This step corresponds to the "slag separation step" described above, and the details thereof are as described above.

Incidentally, a sulfurization step or a pulverization step may be provided after the slag separation step. Furthermore, the obtained valuable metal alloy may be subjected to a hydrometallurgical process. The details of the sulfurization step, the pulverization step, and the hydrometallurgical process are as described above.

### Examples

Hereinafter, the present invention is described more specifically with reference to Examples, but the present invention is not limited to the following Examples at all.

### [Flow of valuable metals recovery treatment (operation of each step)]

A treatment for recovering valuable metals was performed using a waste lithium ion battery containing lithium (Li), aluminum (Al), and valuable metals (Cu, Ni, Co) as a raw material.

### (Waste battery pretreatment step, and pulverization step)

First, as a waste lithium ion battery, a 18650 type cylindrical battery, a used battery of an in-vehicle rectangular battery, and a defective product collected in the battery production step were prepared. Then, the waste lithium ion battery was immersed in salt water to be discharged, moisture was then removed, and the electrolytic solution was decomposed and removed by roasting in the atmosphere at a temperature of 260°C to obtain a battery content.

Next, the battery contents were pulverized by a pulverizer (Trade name: Good cutter, manufactured by Ujiie Manufacturing Co., Ltd.) to obtain a pulverized product.

### (Oxidative roasting step)

Next, the obtained pulverized product was subjected to oxidative roasting at a heating temperature of 900°C for 180 minutes in the air in a rotary kiln.

### (Reductive melting step)

Next, to the resulting oxidatively roasted product, graphite powder as a reducing agent was added in an amount of moles (That is, the graphite powder is 1.2 times the number of moles necessary for reducing the valuable metal.) 0.6 times the total number of moles of valuable metals (Cu, Ni, Co), and calcium oxide (CaO) as a flux was further added to perform reductive melting treatment.

Here, as a melting furnace for performing the reductive melting treatment, a submerged arc furnace capable of cooling the furnace wall from the outside with a water-cooled jacket was used. By using such a cooling means, while the furnace wall was cooled by the cooling means, the thickness of the layer of the slag was adjusted so that the temperature of the interface between the layer of the alloy and the layer of the slag was higher than the temperature of the refractory surface of the furnace wall, and the reductive melting treatment was performed.

The temperature of the interface between the layer of the alloy and the layer of the slag, the temperature of the refractory surface of the furnace wall in the melting furnace, and the thickness of the layer of the slag adjusted based on them are collectively shown in the following Table 1.

By such a reductive melting treatment, valuable metals were alloyed to obtain a reduced product composed of an alloy and slag.

### (Slag separation step)

Slag was separated from the obtained reduced product, and an alloy was recovered to obtain a recovered alloy.

### [Component Analysis of Slag and Alloy]

Component analysis of the slag and alloy separated from the reduced product was performed as follows. That is, the obtained slag and alloy were cooled, pulverized, and analyzed by fluorescent X-rays.

### (Recovery ratio of valuable metal)

The recovery ratio of the valuable metal (Co) was calculated based on the following formula 1. The component analysis in the recovered alloy was performed by fluorescent X-ray as described above. Recovery ratio of valuable metal (%) = (Co weight in recovered alloy) ÷ (Co weight in recovered alloy + Co weight in slag) ×100

### [Evaluation results]

Table 1 below shows the results of the cobalt recovery ratio when the thickness of the layer of the slag was adjusted and treated so that the temperature of the interface between the layer of the alloy and the layer of the slag is larger than the temperature of the refractory surface of the furnace wall, and the results of the presence or absence of the formation of the slag coating layer on the furnace wall and the presence or absence of the slag solidified layer at the interface. The presence or absence of the formation of the slag coating layer was confirmed by visually confirming the inside of the furnace after the end of the test. The presence or absence of the slag solidified layer at the interface was determined by inserting a measuring rod into the interface.

**[Table 1]**

| | Raw material | | | Slag heating temperature | Metal heating temperature | Interface temperature between slag layer and metal layer | Estimated temperature of refractory surface | Slag layer thickness | Presence or absence of slag solidified layer at interface | Cobalt recovery ratio | Presence or absence of formation of slag coating layer |
|---|---|---|---|---|---|---|---|---|---|---|---|
| | Oxidatively roasted product | Graphite powder | Flux (CaO) | | | | | | | | |
| | (kg) | (kg) | (kg) | (°C) | (°C) | (°C) | (°C) | (mm) | | (%) | |
| Example 1 | 300 | 9.6 | 28 | 1550 | 1340 | 1457 | 1250 | 140 | Absence | 97.8 | Presence |
| Comparative Example 1 | 300 | 9.6 | 28 | 1550 | - | < 1250 (estimated) | 1250 | 200 | Presence | - | Presence |

As can be seen from the results in Table 1, in Example 1, the slag coating layer was formed on the furnace wall of the melting furnace to protect the refractory. In addition, the separability between the slag and the metal was also good, and the cobalt recovery ratio was 95% or more in all the samples. As described above, by adjusting the thickness of the layer of the slag so that the temperature of the interface between the layer of the alloy and the layer of the slag is larger than the temperature of the refractory surface of the furnace wall, no slag solidified layer was observed at the interface, and good results were obtained.

On the other hand, in Comparative Example 1, the slag coating layer was formed on the furnace wall of the melting furnace to protect the refractory, but as a result of adjusting the thickness of the slag layer so that the temperature of the interface between the layer of the alloy and the layer of the slag was equal to or lower than the temperature of the refractory surface of the furnace wall, a slag solidified layer was found at the interface. In addition, the separability between the slag and the metal was extremely deteriorated, the metal could not be effectively recovered, and the operation was stopped. This is considered to be because, since the slag solidified layer was formed at the interface, the metal particles in the slag could not reach the metal layer below the interface when the raw material was charged additionally.

## Claims

1. A method for producing valuable metals from a raw material containing the valuable metals containing copper (Cu), nickel (Ni), and cobalt (Co), the method comprising:
a preparation step of preparing a raw material containing at least lithium (Li), aluminum (Al), and the valuable metal;
a reductive melting step of subjecting the raw material to a reductive melting treatment using a melting furnace provided with a cooling means for cooling a furnace wall from an outside to obtain a reduced product containing an alloy containing the valuable metals and slag; and
a slag separation step of separating slag from the reduced product to recover an alloy,
wherein in any one or both of the preparation step and the reductive melting step, a flux containing calcium (Ca) is added to the raw material, and
in the reductive melting step, while cooling the furnace wall of the melting furnace by the cooling means, thickness of the slag layer is adjusted so that the temperature of the interface between a layer of the alloy and a layer of the slag is higher than the temperature of the refractory surface of the furnace wall in the melting furnace.

2. The method for producing valuable metals according to claim 1,
wherein in the reductive melting step, the thickness of the slag layer is adjusted while confirming that the interface is a molten body by inserting a measuring rod into the interface between a layer of the alloy and a layer of the slag.

3. The method for producing valuable metals according to claim 1 or 2,
wherein the raw material includes a waste lithium ion battery.
